# EUROPÄISCHE PATENTSCHRIFT

(11) **EP 2 681 603 B1**
(45) Veröffentlichungstag und Bekanntmachung des Hinweises auf die Patenterteilung: **14.01.2015**
(21) Anmeldenummer: 12746004.6
(22) Anmeldetag: 14.02.2012
(51) Int. Cl.: G02B 7/02, G02B 26/12, G02B 27/00

(54) **JUSTIERBARE LINSENFASSUNG FÜR EINE STREIFENLINSE**
ADJUSTABLE LENS MOUNT FOR A STRIP LENS
MONTURE DE LENTILLE AJUSTABLE POUR UNE LENTILLE EN FORME DE BANDE

(30) Priorität: 01.03.2011 DE 102011012886
(43) Veröffentlichungstag der Anmeldung: 08.01.2014
(73) Patentinhaber: JENOPTIK Optical Systems GmbH, 07745 Jena (DE)
(72) Erfinder: DRESSLER, Thomas, 07749 Jena (DE); EICHLER, Elke, 07747 Jena (DE)
(74) Vertreter: Waldauf, Alexander
(86) Internationale Anmeldenummer: PCT/DE2012/100033
(87) Internationale Veröffentlichungsnummer: WO 2012/116693

(56) Entgegenhaltungen:
- EP-A1- 1 780 566
- EP-A2- 2 017 664
- US-A- 4 496 209
- US-A1- 2004 125 193
- US-A1- 2006 132 880
- US-A1- 2006 232 844
- US-A1- 2006 238 845
- US-A1- 2007 253 047
- US-A1- 2008 212 155

## Beschreibung

Die Erfindung betrifft eine justierbare Linsenfassung für eine Streifenlinse, insbesondere in Form einer langen, dünnen Zylinderlinse, wie sie in Scan-Objektiven bei der Lasermaterialbearbeitung und in der Druckindustrie zur Anwendung kommt.

Sie bildet hier in der Regel innerhalb einer optischen Anordnung das letzte optisch abbildende Element, die den Laserstrahl, welcher die Streifenlinse scannend in Richtung deren Längsausdehnung (Scan-Richtung) überstreicht, in eine Bildebene, in der das zu bearbeitende Werkstück angeordnet ist, fokussiert.

Die dabei durch den Fokus auf dem Werkstück beschriebene Scan-Linie ist theoretisch eine Gerade, sie weicht praktisch jedoch in Richtung der Relativbewegung zwischen der Scan-Linie und dem Werkstück (Cross-Scan-Richtung), senkrecht zur Scan-Richtung, aufgrund von Toleranzen der an der Abbildung teilnehmenden Bauteile von einer idealen Geraden ab. Um diese Abweichungen innerhalb einer Toleranzgrenze zu halten, ist es bekannt die Streifenlinse über ihre Längsausdehnung senkrecht zu deren optischen Achse durch punktuelle Krafteinwirkung zu verformen und somit die Scan-Linie zu linearisieren.

Eine Zylinderlinse zeichnet sich in ihrer Bauform gegenüber üblichen rotationssymmetrischen Linsen dadurch aus, dass sie über ihre gesamte Länge einen gleichen Querschnitt senkrecht zu ihrer Längsausdehnung und damit eine konstante Dicke (Ausdehnung in Richtung der optischen Achse) aufweist. Diese Besonderheit macht sie dazu prädestiniert, sofern sie verhältnismäßig lang und dünn ist, durch Justage über eine gezielte lokale Deformation im Submikrometerbereich, die an jedem Punkt entlang der Länge mit einem gleich großen Verstellweg bewirkt werden kann, die Strahlabbildung zu manipulieren, um die vom Fokus beschriebene Scan-Linie zu linearisieren.

Um einer langen und dünnen Streifenlinse mechanische Stabilität zu geben, ist es üblich die Streifenlinse bereits vor der finalen Bearbeitung ihrer optisch wirksamen Fläche auf einer Trägerleiste entlang einer Fügefläche stoffschlüssig aufzubringen. Die Trägerleiste bleibt dann dauerhaft mit der Streifenlinse verbunden.

Damit eine Verformbarkeit der Streifenlinse möglich wird, muss die Trägerleiste entsprechend mit den zur Verfügung stehenden Justierkräften bzw. Justierwegen verformbar sein, was durch die Auswahl einer dafür optimierte Biegesteifigkeit der Trägerleiste, durch die Wahl eines Materials mit geeignetem Elastizitätsmodul und einem dazu korrelierenden Flächenträgheitsmoment der Trägerleiste, bestimmt durch deren Dimensionierung , insbesondere der Dicke, erreicht wird.

Gemäß dem Stand der Technik wird eine solche Trägerleiste breiter ausgeführt als die erforderliche Fügefläche breit ist, über die die Streifenlinse mit der Trägerleiste fest verbunden ist, um auf der gegenüberliegenden Seite von der Fügefläche eine ausreichend breite Montagefläche zur Verfügung zu stellen an der eine Vielzahl von Stellschrauben entlang der Längsausdehnung der Trägerleiste angreifen können, um diese gegenüber einer steifen Grundplatte justierbar zu fixieren.

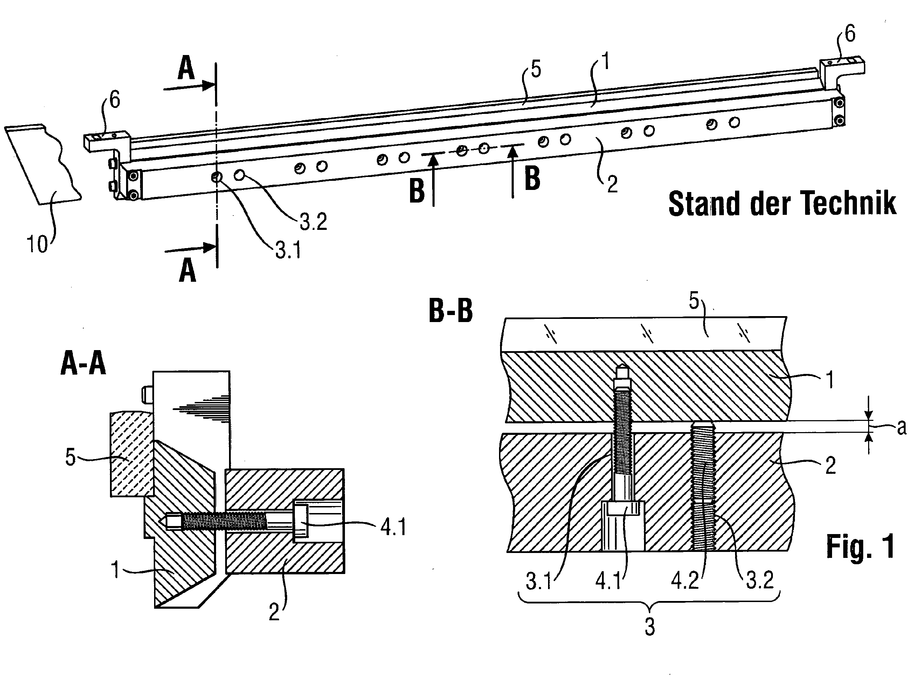

In Fig. 1 ist eine Linsenfassung mit Streifenlinse, wie sie aus dem Stand der Technik bekannt ist, dargestellt. Gezeigt sind eine perspektivische Ansicht im Abbildungsmaßstab 1:2 und zwei Schnittdarstellungen (nicht maßstabsgerecht).

Die Linsenfassung besteht im Wesentlichen aus einer lang gestreckten Trägerleiste 1 mit einer Fügefläche auf der eine Streifenlinse 5 über deren gesamte Länge aufgebracht werden kann und einer steifen Grundplatte 2, die auf der zur Fügefläche gegenüberliegenden freien Seite der Trägerleiste 1 vorgesehen ist. Die Grundplatte 2 ist geringfügig länger als die Trägerleiste 1 und weist entlang ihrer Länge eine Reihe von im Wechsel angeordneten abgesenkten Durchgangslöchern 3.1 und durchgehenden Gewindebohrungen 3.2 auf. An den Enden sind die Trägerleiste 1 und die Grundplatte 2 mit einem vorgegebenen Justageabstand zueinander an seitlichen Haltern 6 montiert, über welche die Linsenfassung an einer Referenzfläche 10, die z.B. an einem Gehäuse eines Scan-Objektivs vorgesehen ist, befestigt werden kann.

In die Durchgangslöcher 3.1 sind erste Stellschrauben 4.1, bevorzugt Zylinderkopfschrauben eingeführt, die an der freien Außenfläche der Trägerleiste 1 in vorgesehene Gewindebohrungen (nachfolgend zur Unterscheidung als mit Gewinde versehene Bohrungen 8 benannt) eingreifen. Durch ein differenziertes Anziehen einzelner erster Stellschrauben 4.1, die damit über einen differenzierten Stellweg verstellt werden können, kann die Trägerleiste 1 örtlich mehr oder weniger zur Grundplatte 2 hingezogen werden.

In die durchgehenden Gewindebohrungen 3.2 sind zweite Stellschrauben 4.2, bevorzugt Kugelspannschrauben eingeführt, die an der freien Aussenfläche der Trägerleiste 1 zur Anlage kommen. Durch ein differenziertes Anziehen einzelner zweiter Stellschrauben 4.2 wird die Trägerleiste 1 von der Grundplatte 2 örtlich mehr oder weniger weg gedrückt.

Über ein gezieltes Manipulieren der ersten und zweiten Stellschrauben 4.1 , 4.2 kann die Trägerleiste 1 und somit die mit der Trägerleiste 1 fest verbundene Streifenlinse 5 im Submikrometerbereich in Cross-Scan-Richtung (CSR) wellenförmig verformt werden.

Nachteilig an der beschriebenen Linsenfassung ist der hierfür erforderliche Bauraum unmittelbar angrenzend an die Streifenlinse 5. Im dargestellten Schnitt A-A ist deutlich zu sehen, dass die Trägerleiste 1 sich in Richtung der optischen Achse, die gleich der Cross-Scan-Richtung (CSR) ist, deutlich über die Dicke der Streifenlinse 5 hinaus erstreckt. Damit ist es nicht möglich in diesem Bereich ein weiteres optisches oder mechanisches Bauteil anzuordnen.

Aufgrund der üblicherweise sehr kurzen Brennweiten von Zylinderlinse, besteht häufig der Bedarf weitere optische und mechanische Bauteile nahe der als Streifenlinse 5 ausgeführten Zylinderlinse anzuordnen, weshalb es von Nachteil ist, wenn der für die Linsenfassung benötigte unmittelbar an die Streifenlinse 5 angrenzende Bauraum über die Dicke der Streifenlinse 5 hinausreicht.

Darüber hinaus kann die Trägerleiste 1 den Strahlengang unerwünscht begrenzen. Um eine Justage der Streifenlinse 5 nach dem Einbau der Linsenfassung in eine optische Anordnung zu gewährleisten, kann die mechanische Verbindung zwischen der Grundplatte 2 und einer Referenzfläche 10 nur über seitliche Halter 6 erfolgen, um den Zugang zu den Stellschrauben 4.1, 4.2 zu ermöglichen. Eine solche Befestigung setzt eine besonders hohe Biegesteifigkeit der Grundplatte 2 voraus.

Die US 2006/132880 A1 offenbart eine justierbare Linsenfassung für eine Streifenlinse mit einer Trägerleiste, die mit einer ihrer Längsseiten mit einer optisch nicht wirksamen Längsseite einer zu fassenden Streifenlinse in Verbindung steht und einer Grundplatte, die an ihren Enden zu den Enden der Trägerleiste in einem festen Justierabstand angeordnet und durch Feststellschrauben zueinander fixiert ist und zwischen den Enden über erste, als Zugschrauben wirkende Stellschrauben und zweite, als Druckschrauben wirkende Stellschrauben, die abwechselnd in einer Reihe angeordnet sind, mit der Trägerleiste in Verbindung stehen, so dass die Trägerleiste und folglich die Streifenlinse über ihre Länge in Wirkungsrichtung der ersten und zweiten Stellschrauben, senkrecht zu ihrer optischen Achse verformt werden kann.

Der Erfindung liegt die Aufgabe zu Grunde, eine verbesserte Linsenfassung für eine Streifenlinse zu finden, die weniger Bauraum unmittelbar angrenzend an eine mit ihr gefasste Streifenlinse benötigt. Vorteilhaft sollen die Anforderungen an eine Grundplatte der Linsenfassung geringer sein, um diese entweder mit weniger

Material und folglich weniger Gewicht oder preislich günstigerem Material ausführen zu können.

Diese Aufgabe wird durch eine nach Anspruch 1 justierbare Linsenfassung für Streifenlinsen 5 mit einer Trägerleiste 1, die mit einer ihrer Längsseiten mit einer optisch nicht wirksamen Längsseite 5.1 einer zu fassenden Streifenlinse 5 in Verbindung steht, und einer Grundplatte 2, die an ihren Enden zu den Enden der Trägerleiste 1 in einem festen Justierabstand a angeordnet ist und zwischen den Enden über erste, als Zugschrauben wirkende Stellschrauben 4.1 und zweite, als Druckschrauben wirkende Stellschrauben 4.2, die abwechselnd in einer Reihe angeordnet sind, mit der Trägerleiste 1 in Verbindung steht, sodass die Trägerleiste 1 und folglich die Streifenlinse 5 über ihre Länge in Wirkungsrichtung der ersten und zweiten Stellschrauben 4.1 und 4.2, senkrecht zu ihrer optischen Achse 5.2 verformt werden kann, durch folgende Merkmale gelöst.

Die Streifenlinse 5 und die Trägerleiste 1 stehen nicht unmittelbar sondern mittelbar über eine Abstandsleiste 7 in Verbindung, wobei die Abstandsleiste 7 auf einer Längsseite 7.1 mit der Längsseite der Streifenlinse 5.1 stoffschlüssig verbunden ist und auf der gegenüberliegenden Längsseite der Abstandsleiste 7.2 mit der Längsseite der Trägerleiste 1 fest verbunden ist. Diese Abstandsleiste 7 hat die Funktion den für die Bauteile der Linsenfassung notwendigen Bauraum, von der Streifenlinse 5 weg zu verlagern. Um die Kräfte, die für eine Verstellung der Stellschrauben 4.1 und 4.2 erforderlich sind, gering zuhalten, weist die Abstandsleiste 7 eine möglichst geringe Biegefestigkeit, jedoch eine möglichst hohe Druckfestigkeit auf. Damit die Abstandsleiste 7, die aus einem druckfesten Material besteht, eine nur geringe Biegefestigkeit aufweist, sind in diese eine Vielzahl von zur gegenüberliegenden Längsseite 7.2 offene Schlitze 14 eingebracht. Sie verlaufen in Wirkungsrichtung der Stellschrauben 4.1, 4.2 über die gesamte Breite b_{A} der Abstandsleiste 7, womit die Abhängigkeit der Biegefestigkeit der Abstandsleiste 7 von deren Geometrie, durch die verbleibende Restdicke d_{Ar} des unterhalb der Schlitze 14 verbleibenden Schlitzboden bestimmt wird.

Vorteilhaft weist die Trägerleiste 1, in einer Reihe angeordnet, abwechselnd Durchgangslöcher 3.1 und durchgehende Gewindebohrungen 3.2 auf und die ersten Stellschrauben 4.1 greifen durch die Durchgangslöcher 3.1 in mit Gewinde versehene Bohrungen 8 der Grundplatte 2 ein, während die zweiten Stellschrauben 4.2 durch die Gewindebohrungen 3.2 hindurch an die Grundplatte 2 gedrückt anliegen.

Der notwendige Justierabstand a ist vorteilhaft durch eine Dreipunktauflage bestimmt.

Die Trägerleiste 1 und die Grundplatte 2 sind an ihren Enden vorteilhaft über ein Fest- und ein Loslager miteinander verbunden.

Um eine mögliche Verbiegung der Grundplatte 2 sicher auszuschließen, ist die Grundplatte 2 unmittelbar an einer Referenzfläche 10 mit wenigstens zwei Freiheitsgraden zur Justierung montierbar. Sie kann damit, vergleichsweise zu einer Verbindung mit der Referenzfläche 10 über seitliche Halter 6 dünner ausgeführt werden.

Indem die Grundplatte 2 mittelbar über eine Basisplatte 9 an einer Referenzfläche 10 montierbar ist, kann die Grundplatte 2 relativ zur Referenzfläche 10 justiert werden, indem vorteilhaft die Basisplatte 9 mit zwei Freiheitsgraden zur Referenzfläche 10 und die Grundplatte 2 mit zwei weiteren Freiheitsgraden zur Basisplatte 9 justierbar ausgeführt ist.

Um die Linsenfassung für den Einbau in unterschiedliche optische Anordnungen zu modifizieren, bei denen insbesondere die Referenzfläche 10 in einem unterschiedlichen Abstand zur Streifenlinse 5 vorgesehen ist, ist die Dicke der Abstandsleiste d_{A} vorteilhaft bei gleichbleibender Restdicke d_{Ar} an jeweils unterschiedlich gegebenen Schnittstellen anpassbar.

Um einen möglichst großen Bauraum nahe der Streifenlinse 5 für andere optische oder mechanische Bauteile freizuhalten, ist die Breite der Abstandsleiste b_{A} vorteilhaft geringer als die Höhe der Streifenlinse h_{L}.

Eine weitere Vergrößerung dieses Bauraums ergibt sich, wenn die Breite der Abstandsleiste b_{A} vom Schlitzboden aus abnehmend ist, und/oder die Trägerleiste 1 und die Abstandsleiste 7 einseitig bündig miteinander verschraubt sind.

Der Kerngedanke der Erfindung liegt darin, zwischen einer verformbaren Trägerleiste und einer Streifenlinse eine Abstandsleiste vorzusehen, welche eine möglichst geringe Biegesteifigkeit aufweist. Diese Abstandsleiste hat die Funktion die Streifenlinse und die Trägerleiste fest miteinander zu verbinden, um eine Deformation der Trägerleiste auf die Streifenlinse zu übertragen. In Abhängigkeit von der Dicke der Abstandsleiste wird der für die Linsenfassung notwendige Bauraum weitestgehend von der optischen Achse weg verlagert, sodass hier Platz für die Anordnung anderer gefasster optischer Bauteile entsteht.

Anhand der Zeichnungen wird die Linsenfassung im Folgenden beispielhaft näher erläutert.

Es zeigen:
- Fig. 1: eine Linsenfassung gemäß dem Stand der Technik
- Fig. 2a-2d: eine bevorzugte Ausführung einer erfindungsgemäßen Linsenfassung

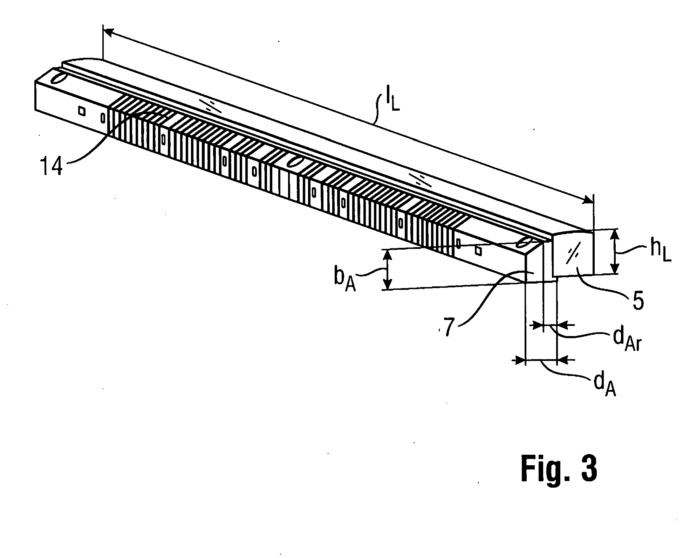

- Fig. 3: eine Abstandsleiste mit einer Streifenlinse gemäß einer Ausführung nach Fig. 2

Die in **Fig. 1** dargestellte Linsenfassung betrifft eine Linsenfassung wie sie aus dem Stand der Technik bekannt ist und wie sie bereits ausführlich in der Beschreibung des Standes der Technik erläutert wurde.

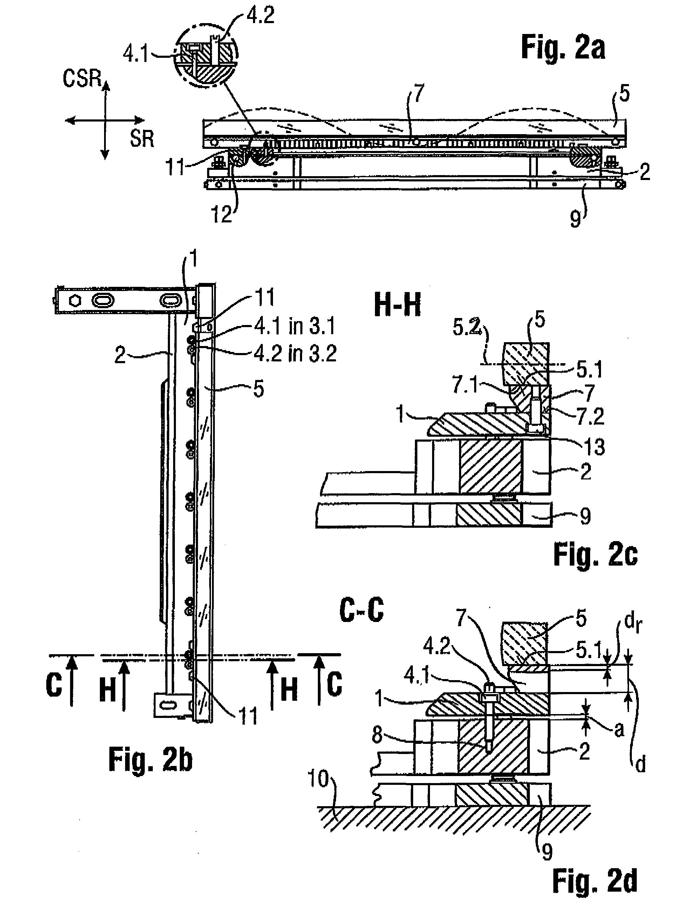

In **Fig. 2** ist eine bevorzugte Ausführung einer erfindungsgemäßen Linsenfassung in Frontansicht, mit einem vergrößerten Ausschnitt in Draufsicht und in zwei Schnittbildern dargestellt. Die Frontansicht und die Draufsicht wurden maßstabsgerecht in einem Maßstab von 1,5:1 gezeichnet, um einen Hinweis für den Begriff: "lange und dünne" Streifenlinse zu vermitteln.

Eine erfindungsgemäße Linsenfassung ist gleich einer aus dem Stand der Technik bekannten Linsenfassung wie sie eingangs erläutert wurde, so konzipiert, dass eine gefasste Streifenlinse, die in Längsrichtung, welche gleich der Scan-Richtung (SR) ist, von einem Laserstrahl abgescant wird und damit eine Scan-Linie beschreibt, die senkrecht zur Scan-Richtung SR, in Cross-Scan-Richtung CSR punktuell deformiert werden kann, um die Scan-Linie zu linearisieren.

Die Linsenfassung mit einer gefassten Streifenlinse 5 umfasst im Wesentlichen eine Streifenlinse 5, eine Abstandsleiste 7, eine Trägerleiste 1, eine Grundplatte 2 und eine Basisplatte 9, sowie Stellschrauben 4.1 und 4.2, über welche die Trägerleiste 1 und folglich die Abstandsleiste 7 und die Streifenlinse 5 gegenüber der Grundplatte 2 verformbar sind.

**Fig. 2** zeigt das erfindungswesentliche Bauteil, die Abstandsleiste 7, genauer.

Die Streifenlinse 5 ist über eine ihrer optisch nicht wirksamen Längsseiten 5.1 mit einer Längsseite der Abstandsleiste 7.1 stoffschlüssig verbunden, insbesondere verklebt.

Die Abstandsleiste 7 weist mit der Länge der Streifenlinse I_{L} wenigstens annähernd eine gleiche Länge auf, um auf sie wirkenden Biegekräfte auf die gesamte Länge I_{L} der Streifenlinse 5 übertragen zu können. Die Dicke d_{A} ist variierbar und kann davon abhängig gewählt werden, in welchem Abstand die optische Achse der Streifenlinse 5.2 zu einer Referenzfläche 10, an der die Linsenfassung bei Integration in eine optische Anordnung montiert wird, verlaufen soll bzw. wie viel Raum nahe der Streifenlinse 5 für daneben angeordnete Bauteile benötigt wird.

Im Unterschied hierzu, ist im beschriebenen Stand der Technik, dieser Abstand über die Länge von seitlichen Haltern 6 variierbar, über welche die Linsenfassung an einer Referenzfläche 10 montiert werden kann. Damit kann eine Linsenfassung gemäß dem Stand der Technik nicht, wie vorteilhaft gemäß einer hier aufgezeigten Linsenfassung, unmittelbar über die Basisplatte 9 oder in einer anderen Ausführung unmittelbar über die Grundplatte 2 an der Referenzfläche 10 montiert werden, was für die Dimensionierung der Grundplatte 2 und gegebenenfalls der Basisplatte 9 von Bedeutung ist. Erläuterungen hierzu erfolgen an späterer Stelle.

Die Dicke der Abstandsleiste d_{A} ist bevorzugt geringer als die Höhe der Streifenlinse h_{L}, wobei eine hinreichend breite Fügefläche gegeben sein muss, um die Streifenlinse 5 stabil und mechanisch fest mit der Abstandsleiste 7 zu verbinden. Die Breite der Abstandsleiste b_{A}, knapp hinter der Fügefläche beginnend, ist bevorzugt abnehmend. Eine Optimierung der Abmessungen der Abstandsleiste 7 mit einer möglichst geringen Dicke d_{A} , einer abnehmenden Breite b_{A} und letztendlich einer größeren Dicke d_{A} führen zu dem gewünschten Effekt, in einem Bereich nahe der Streifenlinse 5 freien Raum zu haben, um benachbarte Bauteile anordnen zu können.

Damit wirkende Biegekräfte ohne einen beachtlichen Widerstand auf die Streifenlinse 5 übertragen werden können, weist die Abstandsleiste 7 eine möglichst geringe Biegefestigkeit, jedoch eine hohe Druckfestigkeit auf. Die geringe Biegefestigkeit wird insbesondere dadurch erreicht, dass die Abstandsleiste 7 geschlitzt ausgeführt wird. Die Schlitze 14 sind nahezu über die gesamte Länge der Abstandsleiste 7 verteilt und haben bevorzugt nur dort zueinander einen größeren Abstand, wo zur Verbindung mit der Trägerleiste 1 mit einem Gewinde versehene Bohrungen 8 vorgesehen sind. Die Schlitze 14 sind zu einer der Längsseite 7.1 gegenüberliegenden Längsseite 7.2 offen und erstrecken sich über deren gesamte Breite b_{A} . Das unterhalb der Schlitze 14 verbleibende Material, im weiteren Schlitzboden genannt, hat eine konstante Restdicke d_{Ar} die möglichst gering gewählt ist.

Da die Abhängigkeit der Biegesteifigkeit von der Dimensionierung im Wesentlichen durch die Dicke in Richtung einer einwirkenden Biegekraft gegeben ist, ist nicht die Dicke der Abstandsleiste d_{A} , sondern die Restdicke d_{Ar}, für die Biegesteifigkeit der Abstandsleiste 7 bestimmend. Je geringer die Restdicke d_{Ar} ist, desto geringer ist deren Biegesteifigkeit. Die Dicke der Abstandleiste d_{A} kann damit variiert werden, bei Beibehaltung der Restdicke d_{Ar}, ohne dass die Biegesteifigkeit der Abstandsleiste 7 verändert wird.

Die Abstandsleiste 7 übernimmt einen Teil der Funktion den eine Trägerleiste 1 gemäß der aus dem Stand der Technik bekannten Linsenfassung hat, nämlich das Halten und die Stabilisierung der Streifenlinse 5 innerhalb der Linsenfassung und auch bereits während der vorangehenden Fertigung.

An die Abstandsleiste 7 ist die Trägerleiste 1 montiert, bevorzugt, durch mehrfache Verschraubungen mittels Fixierschrauben 13.

Die Trägerleiste 1 ist gleich einer beschriebenen Linsenfassung, gemäß dem Stand der Technik, durch die Materialauswahl und deren Dimensionierung, insbesondere deren Dicke so konzipiert, dass sie eine Biegesteifigkeit aufweist die eine Verformung durch die Verstellung der Stellschrauben 4.1, 4.2 erlaubt.

Sie kann geringfügig kürzer ausgeführt sein als die Abstandsleiste 7, um dadurch Montagefreiheit für die Befestigung der Grundplatte 2 an einer Referenzfläche 10 zu gewähren.

An ihren Enden sind die Trägerleiste 1 und die Grundplatte 2 über ein Festlager und ein Loslager in einem Justierabstand a über Feststellschrauben 11 miteinander verbunden. Der Justierabstand a wird bevorzugt über eine Dreipunktauflage gewährleistet, die z. B. durch Kugeln 12 aufgespannt werden kann.

Die Trägerleiste 1 weist über ihre Länge zwischen den beiden Lagern eine Reihe von im Wechsel angeordnet abgesenkten Durchgangslöchern 3.1 und durchgehenden Gewindebohrungen 3.2 auf. In die Durchgangslöcher 3.1 sind erste Stellschrauben 4.1, bevorzugt Zylinderkopfschrauben eingeführt, die an einer Außenfläche der Grundplatte 2 in vorgesehene Gewindebohrungen (nachfolgend zur Unterscheidung als mit Gewinde versehene Bohrungen 8 benannt) eingreifen. Durch ein differenziertes Anziehen einzelner erster Stellschrauben 4.1 kann die Trägerleiste 1 örtlich mehr oder weniger zur Grundplatte 2 hingezogen werden.

In die Gewindebohrungen 3.2 sind zweite Stellschrauben 4.2, bevorzugt Kugelspannschrauben eingeführt, die an der gleichen Außenfläche zur Anlage kommen. Durch ein Anziehen bzw. Lösen dieser zweiten Stellschrauben 4.2 wird die Trägerleiste 1 von der Grundplatte 2 mehr oder weniger weg gedrückt.

Über ein gezieltes Manipulieren der ersten und zweiten Stellschrauben 4.1, 4.2 kann die Trägerleiste 1 und somit die mit der Trägerleiste 1 über die Abstandsleiste 7 fest verbundene Streifenlinse 5 im Submikrometerbereich verformt werden.

Die Grundplatte 2 weist eine sehr hohe Steifigkeit auf, so dass der Verstellweg der Stellschrauben 4.1, 4.2 vollständig in die Verformung der Trägerleiste 1 eingeht.

Um die Grundplatte 2 in eine definierte Lage zu einer Referenzfläche 10 zu bringen, könnte die Grundplatte 2, wie auch aus dem Stand der Technik bekannt, über zwei seitliche Halter 6 an der Referenzfläche 10 montierbar sein. Mechanisch stabiler und die Toleranzkette zwischen Grundplatte 2 und Referenzfläche 10 verkürzend, ist jedoch eine unmittelbare Befestigung der Grundplatte 2 an der Referenzfläche 10. Noch vorteilhafter ist jedoch eine Befestigung der Grundplatte 2 mittelbar über eine Basisplatte 9, die zwischen der Grundplatte 2 und der Referenzfläche 10 angeordnet ist. Dies hat den Vorteil, dass eine Justage der Grundplatte 2 zur Referenzfläche 10 dann nicht allein durch das Verschieben und Verkippen der Grundplatte 2 erfolgt, sondern auf die Grundplatte 2 und die Basisplatte 9 aufgeteilt ist. Die Basisplatte 9 ist dann so an der Referenzfläche 10 montierbar, dass sie bei der Montage mit zwei Freiheitsgraden, nämlich in zwei Achsrichtungen, in Richtung der optischen Achse 5.2. und senkrecht hierzu, justiert werden kann. Nach Fixierung der Basisplatte 9 in der einjustierten Position wird darauf die Grundplatte 2 mit ebenfalls zwei Freiheitsgraden in einer hierzu senkrechten Achsrichtung und um die zur optischen Achse 5.2 senkrechte Achsrichtung justiert. Durch diese Justierung wird die Streifenlinse 5 in ihrer Position zu den übrigen optischen Bauteilen der optischen Anordnung positioniert.

### Bezugszeichenliste

- 1: Trägerleiste
- 2: Grundplatte
3.1 Durchgangslöcher
3.2 durchgehende Gewindebohrungen
4.1 erste Stellschrauben
4.2 zweite Stellschrauben
- 5: Streifenlinse
5.1 eine Längsseite der Streifenlinse
5.2 optische Achse der Streifenlinse
- 6: seitliche Halter
- 7: Abstandsleiste
7.1 eine Längsseite der Abstandsleiste
7.2 gegenüberliegende Längsseite der Abstandsleiste
- 8: mit Gewinde versehene Bohrung
- 9: Basisplatte
- 10: Referenzfläche
- 11: Feststellschrauben
- 12: Kugeln der Dreipunktauflage
- 13: Fixierschrauben
- 14: Schlitz

- a: Justierabstand
- d_{A}: Dicke der Abstandsleiste
- d_{Ar}: Restdicke der Abstandsleiste
- b_{A}: Breite der Abstandleiste
- h_{L}: Höhe der Streifenlinse
- I_{L}: Länge der Streifenlinse

- SR: Scan-Richtung
- CSR: Cross-Scan-Richtung

## Patentansprüche

1. Justierbare Linsenfassung für eine Streifenlinse (5), mit einer Trägerleiste (1), die mit einer ihrer Längsseiten mit einer optisch nicht wirksamen Längsseite (5.1) einer zu fassenden Streifenlinse (5) in Verbindung steht, und einer Grundplatte (2), die an ihren Enden zu den Enden der Trägerleiste (1), in einem festen Justierabstand a angeordnet und durch Feststellschrauben (11) zueinander fixiert ist und zwischen den Enden über erste, als Zugschrauben wirkende Stellschrauben (4.1) und zweite, als Druckschrauben wirkende Stellschrauben (4.2), die abwechselnd in einer Reihe angeordnet sind, mit der Trägerleiste (1) in Verbindung stehen, sodass die Trägerleiste (1) und folglich die Streifenlinse (5) über ihre Länge in Wirkungsrichtung der ersten und zweiten Stellschrauben (4.1) und (4.2), senkrecht zu ihrer optischen Achse (5.2) verformt werden kann, **dadurch gekennzeichnet, dass** die Streifenlinse (5) und die Trägerleiste (1) mittelbar über eine Abstandsleiste (7) in Verbindung stehen,
wobei die Abstandsleiste (7) auf einer Längsseite (7.1) mit der Längsseite der Streifenlinse (5.1) stoffschlüssig verbunden ist und auf der gegenüberliegenden Längsseite (7.2) mit der Längsseite der Trägerleiste (1) fest verbunden ist und
die Abstandsleiste (7) eine Vielzahl von zur gegenüberliegenden Längsseite (7.2) offenen Schlitzen (14) aufweist, die in Wirkungsrichtung der Stellschrauben (4.1, 4.2) über die gesamte Breite der Abstandsleiste (b_{A}) verlaufen, womit die Abhängigkeit der Biegefestigkeit der Abstandsleiste (7) von deren Geometrie durch die verbleibende Restdicke (d_{Ar}) des unterhalb der Schlitze (14) verbleibenden Schlitzbodens bestimmt wird.

2. Justierbare Linsenfassung nach Anspruch 1, **dadurch gekennzeichnet,**
**dass** die Trägerleiste (1) in einer Reihe angeordnet abwechselnde Durchgangslöcher (3.1) und durchgehende Gewindebohrungen (3.2) aufweist und die ersten Stellschrauben (4.1) durch die Durchgangslöcher (3.1) in mit Gewinde versehene Bohrungen (8) der Grundplatte (2) eingreifen, während die zweiten Stellschrauben (4.2) durch die Gewindebohrungen (3.2) hindurch an die Grundplatte (2) gedrückt anliegen.

3. Justierbare Linsenfassung nach Anspruch 1, **dadurch gekennzeichnet, dass** der Justierabstand (a) durch eine Dreipunktauflage bestimmt ist.

4. Justierbare Linsenfassung nach Anspruch 1, **dadurch gekennzeichnet, dass** die Trägerleiste (1) und die Grundplatte (2) an ihren Enden über ein Fest- und ein Loslager miteinander verbunden sind.

5. Justierbare Linsenfassung nach Anspruch 1, **dadurch gekennzeichnet, dass** die Grundplatte (2) unmittelbar an einer Referenzfläche (10) mit wenigstens zwei Freiheitsgraden zur Justierung montierbar ist.

6. Justierbare Linsenfassung nach Anspruch 1, **dadurch gekennzeichnet, dass** die Grundplatte (2) mittelbar über eine Basisplatte (9) an einer Referenzfläche (10) montierbar ist, wobei die Basisplatte (9) mit zwei Freiheitsgraden zur Referenzfläche (10) und die Grundplatte (2) mit zwei weiteren Freiheitsgraden zur Basisplatte (9) justierbar ist.

7. Justierbare Linsenfassung nach Anspruch 1, **dadurch gekennzeichnet, dass** die Linsenfassung durch eine Änderung der Dimensionierung der Dicke der Abstandsleiste (d_{A}) bei gleichbleibender Restdicke d_{Ar}) für eine Verwendung in unterschiedlichen optischen Anordnungen an jeweils unterschiedlich gegebene Schnittstellen anpassbar ist.

8. Justierbare Linsenfassung nach Anspruch 1, **dadurch gekennzeichnet, dass** die Breite der Abstandsleiste (b_{A}) geringer als die Höhe der Streifenlinse (h_{L}) ist.

9. Justierbare Linsenfassung nach Anspruch 1, **dadurch gekennzeichnet, dass** die Breite der Abstandsleiste (b_{A}) vom Schlitzboden aus abnehmend ist.

10. Justierbare Linsenfassung nach Anspruch 1, **dadurch gekennzeichnet, dass** die Trägerleiste (1) und die Abstandsleiste (7) einseitig bündig miteinander verschraubt sind.

## Claims

1. Adjustable lens mount for a strip lens (5), having a support strip (1) which, by means of one of its longitudinal sides, is connected to an optically non-active longitudinal side (5.1) of a strip lens (5) to be mounted and a mounting plate (2) which, with the ends thereof, is arranged at a fixed adjustment spacing (a) from the ends of the support strip (1) and affixed to the latter by locking screws (11) and which, between the ends, is connected to the support strip (1) by first set screws (4.1), acting as tension screws, and second set screws (4.2), acting as pressure screws, which are arranged alternately in a row, such that the support strip (1) and, as a result, the strip lens (5) can be deformed over its length in the action direction of the first and second set screws (4.1) and (4.2), perpendicular to its optical axis (5.2), **characterized in that**
the strip lens (5) and the support strip (1) are interconnected indirectly via a spacer strip (7),
wherein one longitudinal side (7.1) of the spacer strip (7) is cohesively connected to the longitudinal side of the strip lens (5.1) and the opposite longitudinal side (7.2) of said spacer strip is fixedly connected to the longitudinal side of the support strip (1)
and
the spacer strip (7) has a multiplicity of slits (14) which are open to the opposite longitudinal side (7.2) and which extend in the action direction of the set screws (4.1, 4.2) over the whole width of the spacer strip (b_{A}), as a result of which the dependence of the flexural strength of the spacer strip (7) is determined by the geometry thereof, by the remaining residual thickness (d_{Ar}) of the slit base remaining below the slits (14).

2. Adjustable lens mount according to Claim 1, **characterized**
**in that** the support strip (1) has alternate through holes (3.1) and end-to-end threaded bores (3.2) arranged in a row and the first set screws (4.1) engage through the through holes (3.1) into bores (8), provided with a thread, in the mounting plate (2) while the second set screws (4.2) butt with pressure against the mounting plate (2) through the threaded bores (3.2).

3. Adjustable lens mount according to Claim 1, **characterized**
**in that** the adjustment spacing (a) is determined by a three-point bearing.

4. Adjustable lens mount according to Claim 1, **characterized in that** the support strip (1) and the mounting plate (2) are interconnected at their ends by means of a fixed bearing and a loose bearing.

5. Adjustable lens mount according to Claim 1, **characterized in that** the mounting plate (2) can, for adjustment purposes, be mounted directly on a reference surface (10) with at least two degrees of freedom.

6. Adjustable lens mount according to Claim 1,
**characterized**
**in that** the mounting plate (2) can be mounted indirectly onto a reference surface (10) via a base plate (9), wherein the base plate (9) can be adjusted with two degrees of freedom with respect to the reference surface (10) and the mounting plate (2) can be adjusted with two further degrees of freedom with respect to the base plate (9).

7. Adjustable lens mount according to Claim 1,
**characterized**
**in that** the lens mount can be adapted to respectively different provided interfaces by changing the dimensions of the thickness of the spacer strip (d_{A}) in the case of unchanging residual thickness (d_{Ar}) for use in different optical arrangements.

8. Adjustable lens mount according to Claim 1,
**characterized**
**in that** the width of the spacer strip (b_{A}) is less than the height of the strip lens (h_{L}).

9. Adjustable lens mount according to Claim 1,
**characterized**
**in that** the width of the spacer strip (b_{A}) is decreasing from the slit base.

10. Adjustable lens mount according to Claim 1,
**characterized**
**in that** the support strip (1) and the spacer strip (7) are screwed flush to one another on one side.

## Revendications

1. Monture ajustable pour lentille (5) en ruban, la monture présentant une latte de support (1) raccordée par ses côtés longitudinaux à un côté longitudinal (5.1) optiquement inactif d'une lentille (5) en ruban à monter et
une plaque de base (2) dont les extrémités sont fixées aux extrémités de la latte de support (1) à une distance d'ajustement a fixe par des vis d'immobilisation (11) et qui est reliée à la latte de support (1) entre les extrémités par des premières vis d'ajustement (4.1) agissant comme vis de traction et des deuxièmes vis d'ajustement (4.2) agissant comme vis de poussée, disposées en alternance en rangées de telle sorte que la latte de support (1) et par conséquent la lentille de ruban (5) puissent être déformées perpendiculairement à son axe optique (5.2) sur leur longueur dans la direction d'action des premières et des deuxièmes vis d'ajustement (4.1) et (4.2),
**caractérisée en ce que**
la lentille en ruban (5) et la latte de support (1) sont raccordées indirectement par l'intermédiaire d'une latte d'écartement (7),
**en ce que** la latte d'écartement (7) est raccordée en correspondance de matière au côté longitudinal de la lentille en ruban (5.1) sur un côté longitudinal (7.1) et est raccordée solidairement au côté longitudinal de la latte de support (1) sur le côté longitudinal (7.2) opposé et
**en ce que** la latte d'écartement (7) présente plusieurs fentes (14) ouvertes sur le côté longitudinal (7.2) opposé et s'étendant sur toute la largeur de la latte d'écartement (b_{A}) dans la direction d'action des vis d'ajustement (4.1, 4.2) de telle sorte que la dépendance de la rigidité en flexion de la latte d'écartement (7) vis-à-vis de sa géométrie est définie par l'épaisseur résiduelle (d_{Ar}) du fond de fente qui reste en dessous de la fente (14).

2. Monture ajustable de lentille selon la revendication 1, **caractérisée en ce que** la latte de support (1) est traversée par des perforations (3.1) et des alésages filetés (3.2) disposés en alternance en rangées, les premières vis d'ajustement (4.1) s'engageant par les trous de passage (3.1) dans des alésages (8), dotés d'un filet, de la plaque de base (2) tandis que les deuxièmes vis d'ajustement (4.2) sont repoussées contre la plaque de base (2) à travers les alésages filetés (3.2).

3. Monture ajustable de lentille selon la revendication 1, **caractérisée en ce que** l'écart d'ajustement (a) est défini par un appui sur trois points.

4. Monture ajustable de lentille selon la revendication 1, **caractérisée en ce que** la latte de support (1) et la plaque de base (2) sont raccordées à leurs extrémités par un palier fixe et un palier lâche.

5. Monture ajustable de lentille selon la revendication 1, **caractérisée en ce que** la plaque de base (2) peut être montée directement sur une surface de référence (10) avec au moins deux degrés de liberté permettant l'ajustement.

6. Monture ajustable de lentille selon la revendication 1, **caractérisée en ce que** la plaque de base (2) peut être montée indirectement sur une surface de référence (10) par l'intermédiaire d'une plaque de base (9), la plaque de base (9) pouvant être ajustée par rapport à la surface de référence (10) avec deux degrés de liberté et la plaque de fond (2) peut être ajustée par rapport à la plaque de base (9) avec deux autres degrés de liberté.

7. Monture ajustable de lentille selon la revendication 1, **caractérisée en ce que** la monture pour lentille peut être adaptée sur des interfaces données différentes, par modification du dimensionnement de l'épaisseur de la latte d'écartement (d_{A}) pour une épaisseur résiduelle (d_{Ar}) constante, en vue d'une utilisation dans différents ensembles optiques.

8. Monture ajustable de lentille selon la revendication 1, **caractérisée en ce que** la largeur de la latte d'écartement (b_{A}) est inférieure à la hauteur de la lentille en ruban (h_{L}).

9. Monture ajustable de lentille selon la revendication 1, **caractérisée en ce que** la largeur de la latte d'écartement (b_{A}) diminue depuis le fond de la fente.

10. Monture ajustable de lentille selon la revendication 1, **caractérisée en ce que** la latte de support (1) et la latte d'écartement (7) sont reliées l'une à l'autre à chant sur un côté.
